(19) **Europäisches Patentamt / European Patent Office / Office européen des brevets**

(11) **EP 3 902 728 B1**

(12) # EUROPEAN PATENT SPECIFICATION

(45) Date of publication and mention
of the grant of the patent:
**12.02.2025 Bulletin 2025/07**

(21) Application number: **19905689.6**

(22) Date of filing: **30.10.2019**

(51) International Patent Classification (IPC):
**G06V 20/56** (2022.01)　　**B60W 30/095** (2012.01)
**G06T 7/20** (2017.01)　　**G06T 7/11** (2017.01)

(52) Cooperative Patent Classification (CPC):
**G06V 10/82; B60W 30/0956; B60W 60/0015;**
**G06T 7/277; G06V 10/764; G06V 20/58;**
B60W 2554/00; B60W 2556/50; B60W 2710/207;
B60W 2720/103; B60W 2720/106;
G06T 2207/10016; G06T 2207/20076;
G06T 2207/20081; G06T 2207/20084;　　(Cont.)

(86) International application number:
**PCT/US2019/058690**

(87) International publication number:
**WO 2020/139456 (02.07.2020 Gazette 2020/27)**

(54) **A METHOD AND APPARATUS TO DETERMINE A TRAJECTORY OF MOTION IN A PREDETERMINED REGION**

VERFAHREN UND VORRICHTUNG ZUR BESTIMMUNG EINER BEWEGUNGSBAHN IN EINEM VORBESTIMMTEN BEREICH

PROCÉDÉ ET APPAREIL POUR DÉTERMINER UNE TRAJECTOIRE DE MOUVEMENT DANS UNE RÉGION PRÉDÉTERMINÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2018　US 201816233164**

(43) Date of publication of application:
**03.11.2021　Bulletin 2021/44**

(73) Proprietor: INTEL Corporation
**Santa Clara, CA 95052 (US)**

(72) Inventor: NATROSHVILI, Koba
**76337 Waldbronn (DE)**

(74) Representative: Viering, Jentschura & Partner
mbB
**Patent- und Rechtsanwälte**
**Am Brauhaus 8**
**01099 Dresden (DE)**

(56) References cited:
| | |
|---|---|
| WO-A1-2017/104775 | US-A1- 2010 114 490 |
| US-A1- 2013 335 553 | US-A1- 2015 346 723 |
| US-A1- 2017 123 419 | |

- **DANIEL MEYER-DELIUS, MAXIMILIAN BEINHOFER, WOLFRAM BURGARD: "Grid-Based Models for Dynamic Environments", TECHNICAL REPORT 265, 2011, 31 December 2011 (2011-12-31), XP002807247, Retrieved from the Internet <URL:http://ais.informatik. uni-freiburg.de/publications/papers/report00265. pdf> [retrieved on 20220804]**
- **DOMINIK NUSS, STEPHAN REUTER, MARKUS THOM, TING YUAN, GUNTHER KREHL, MICHAEL MAILE, AXEL GERN, KLAUS DIETMAYER: "A Random Finite Set Approach for Dynamic Occupancy Grid Mapswith Real-Time Application", 10 September 2016 (2016-09-10), XP002807262, Retrieved from the Internet <URL:https://arxiv.org/pdf/1605.02406.pdf> [retrieved on 20220804]**

**(Cont. next page)**

- **LEURENT EDOUARD: "A Survey of State-Action Representations for Autonomous Driving", 29 October 2018 (2018-10-29), pages 1 - 22, XP055930212, Retrieved from the Internet <URL:https://hal.archives-ouvertes. fr/hal-01908175/document> [retrieved on 20220613]**
- **STUMPER DANIEL ET AL: "Offline Object Extraction from Dynamic Occupancy Grid Map Sequences", 2018 IEEE INTELLIGENT VEHICLES SYMPOSIUM (IV), IEEE, 26 June 2018 (2018-06-26), pages 389 - 396, XP033423554, DOI: 10.1109/IVS.2018.8500674**

(52) Cooperative Patent Classification (CPC): (Cont.)
G06T 2207/30236

## Description

### Technical Field

Various aspects described herein relate generally to a method and apparatus to determine a trajectory of motion in a predetermined region.

### Background

Automatic driving vehicles are expected to drive in dynamic traffic conditions in which the road occupation constantly changes due to the continuous movement of vehicles, people and other parties or objects on the road. In such conditions, automatic driving vehicles require ways to estimate and evaluate possible future hazards to maximize safety; with the general objective to reduce the risks for the vehicle, the passengers and other parties on the road or around the vehicle. But automatic driving vehicles require also ways to maximize the utility of the passengers, wherein maximizing utility may include maximize the likelihood that the passengers arrive at destination.

Addressing the problem of automatic driving in traffic conditions requires the fusion of at least two skills. The first skill is the perception of the obstacles on the road with their dynamic aspect, the second skill is navigation to a destination. With respect to the perception skill, initial approaches to address the perception problem were based on detecting and tracking objects using bounding boxes; but the bounding box approach fails to detect large objects, such as buildings for which no bounding box can be constructed and it fails to support information fusion from multiple sensors. In more recent years, alternative approaches based on particle filters in conjunction with dynamic occupancy grids (DOG): dynamic occupancy grid addressed some of the problems of bounding boxes by providing a natural way to fuse information and removing the need to identify bounding boxes around objects on the road. As a result, automatic vehicles may have information about the whereabouts of obstacles on the road.

With respect to the navigation skill, many successful systems and products have addressed this problem, but they all assume that roads are free of traffic. More precisely these products provide a generic direction of motion but they fail to avoid hazards on the road.

Automatic driving vehicles require a way to merge the two skills: the perception skill that detects hazards on the road and the navigation skill to reach the destination by generating trajectories that avoid hazards, minimize risks, maximize safety and still take the passengers to the desired destination.

Meyer-Delius et al., "Grid-Based Models for Dynamic Environments", Technical Report 265, 2011, 2022-12-31, [Retrieved from http://ais.informatik.uni-freiburg.de/publications/papers/report00265.pdf], presents a probabilistic grid-based approach for modeling dynamic environments. In the study, the researchers describe the environment as a spatial grid and use a hidden Markov model to represent the occupancy state and state transition probabilities of each grid cell.

Nuss et al., "A Random Finite Set Approach for Dynamic Occupancy Grid Mapswith Real-Time Application", 10 September 2016, The International Journal of Robotics Research, Pages 1-20, [Retrieved from https:/arxiv.org/pdf/1605.02406.pdf], defines the state of multiple grid cells as a random finite set that allows to model an environment as a stochastic, dynamic system with multiple obstacles observed by a stochastic measurement system.

### Summary

The invention described with this application is set out in the appended set of claims.

### Brief Description of the Drawings

In the drawings, like reference characters generally refer to the same parts throughout the different views. The drawings are not necessarily to scale; emphasis is instead generally being placed upon illustrating the principles described herein. In the following description, various embodiments are described with reference to the following drawings, in which:

FIG. 1 shows an exemplary vehicle including a trajectory of motion determiner to detect space occupation in a predetermined region.
FIG. 2 shows a trajectory of motion determiner that may determine a trajectory of motion across the predetermined region.
FIG. 3 shows an exemplary urban scene that may indicate the road in front of a vehicle.
FIG. 4 shows an exemplary dynamic occupancy grid including a plurality of grid cells.
FIG. 5 shows an embodiment of an occupancy hypothesis determiner.
FIG. 6 shows an exemplary utility value determination associated with an exemplary navigation indication indicating the direction to cross an exemplary intersection.

FIG. 7 shows a diagram illustrating an exemplary direction of motion and an exemplary motion profile.

FIG. 8 shows an exemplary trajectory of motion selector.

FIG. 9 shows a method to determine a trajectory of motion in a predetermined region.

FIG. 10 shows a non-transient computer readable medium storing a computer program in a data and instruction storage which, when executed by a processor, implements a method to determine a trajectory of motion in a predetermined region.

## Description

The following detailed description refers to the accompanying drawings that show, by way of illustration, specific details and embodiments which are described herein may be practiced. Other aspects may be utilized and structural, logical, and electrical changes may be made without departing from the scope described herein. The various aspects described herein are not necessarily mutually exclusive, as some aspects described herein can be combined with one or more other aspects described herein to form new aspects.

The word "exemplary" is used herein to mean "serving as an example, instance, or illustration". Any embodiment or design described herein as "exemplary" is not necessarily to be construed as preferred or advantageous over other embodiments or designs.

Whereas the description, the examples, and the figures below refer to an Automatic Driving (AD) (e.g. Autonomous Driving) vehicle, it should be understood that examples of Automatic Driving vehicles may include automobiles, buses, mini buses, vans, trucks, mobile homes, vehicle trailers, motorcycles, bicycles, tricycles, moving robots, personal transporters, and drones. It should also be understood that Automatic Driving vehicles may include trains, trams, subways and more generally vehicles that are limited to move on pre-specified tracks; it should also be understood that trajectory of motion determiner disclosed applies to vehicles of any size and type.

In addition, it should be understood that the trajectory of motion determiner disclosed, as well as the examples disclosed, are not restricted to vehicles; rather, the trajectory of motion determiner may be used in a wide range of applications including security cameras that may use the trajectory of motion determiner to monitor access to a given area and or guide other vehicles in that area; traffic lights that may use the trajectory of motion determiner to monitor the traffic waiting at an intersection and/or to guide the traffic around the intersection; smart digital signage for both advertisement and information purposes that may use trajectory of motion determiner to estimate the number of impressions or to derive the most relevant content to display; traffic congestion sensors that may use the trajectory of motion determiner to estimate the traffic in a given area looking for ways to resolve the traffic congestion; speedometers that may use the trajectory of motion determiner to compute the speed of vehicles in a given area or to guide vehicles to a safe position..

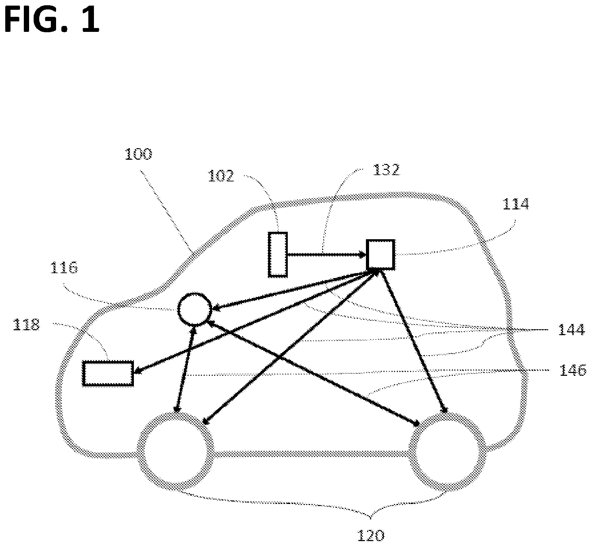

FIG. 1 shows an exemplary vehicle (e.g. an automatic vehicle) 100 including a trajectory of motion determiner 102 to detect space occupation and determine a trajectory of motion within a predetermined region. In some embodiments, examples of space occupation may include static and dynamic objects, wherein exemplary static objects may include street lights, traffic lights, buildings on the side of the road, and exemplary dynamic objects may include pedestrians as well as other vehicles and traffic. In some embodiments, the trajectory of motion may include a plurality of velocity, acceleration, and steering angle values indicating how to drive vehicle 100 across the predetermined area.

The automatic driving vehicle 100 may also include an automotive controller 114 as well as various automotive components such as a steering module 116, a motor 118, and wheels 120 which may also include a braking system and a turning system neither of which are displayed.

In some embodiments, the trajectory of motion determiner 102 may be a stand-alone device that may not be connected with other components. In such cases, the trajectory of motion determiner 102 may signal to the driver of potential dangers and the way around those dangers.

In some embodiments, the trajectory of motion determiner 102 may be connected to automotive controller 114 through the exemplary connection 132. The motion determiner 102 may transmit to the automotive controller 114 through connector 132 a trajectory of motion including a plurality of velocity, acceleration, and steering angles and/or occupancy information.

The automotive controller 114 may control the automotive components such as the steering module 116, the motor 118, and the wheels 120, the braking system, not displayed in FIG. 1, and other systems that are included in the vehicle, to drive the vehicle in a way that is consistent with the trajectory and the motion parameters determined by the motion determiner.

The automotive controller 114 may be configured to fully or partially control vehicle 100. Full control may indicate that the automotive controller 114 may be configured to control the behavior of all other automotive components. Partial control may indicate that the automotive controller 114 may be configured to control only some automotive components, but not others which may be under the control of a human driver. In some exemplary embodiments of partial control, the automotive controller 114 may be configured to control only the vehicle speed, but not the steering. In some embodiments of vehicle 100, partial control may indicate that the automotive controller 114 may be configured to control all automotive components, but only in some situations, for example, control the vehicle on the highway but not on other roads where a human driver should take control. In other embodiments, partial control may indicate any combination of the embodiments above.

In some embodiments, the trajectory of motion determiner 102, and the automotive controller 114 may be distinct components. In some embodiments of vehicle 100, the trajectory of motion determiner 102, and the automotive controller 114 may be integrated into a single device. In some embodiments the perception device 102, and the automotive controller 114 may be partially integrated. In some embodiments, some or all of the components of the trajectory of motion determiner 102 may be integrated within the automotive controller 114.

FIG. 1 also shows an exemplary connection scheme across the different components. The connectors 144 may couple the automotive controller 114 with the steering module 116, the motor 118, and the wheels 120, and the like. The connectors 144 may be configured in such a way that the automotive controller 114 may indicate to the steering module 116, the motor 118, and the wheels 120 how to drive the vehicle, and the steering module 116, the motor 118, and the wheels 120 may indicate odometric information, positioning information and vehicle status information back to the steering module 116.

The connectors 146 couple the steering module 116 to a turning system (not shown) of the wheels 120 to control the driving direction of the vehicle. The connectors 146 may be configured in such a way that the steering module 116 may indicate to the actuating components, such as the turning system (not shown) of the wheels 120 how to drive the vehicle, and the actuating components, such as turning system (not shown) of the wheels 120 may indicate odometric information, positioning information and vehicle status information back to the steering module 116.

The connectors 132, 144 and 146 may be implemented as a wired connection or a wireless connection. Any kind of communication protocol including vehicle bus networks such as Controller Area Network (CAN), Local Interconnected Network (LIN) bus, FlexRay, Media Oriented System Transport (MOST), and Automotive Ethernet, as well as cryptographic and non-cryptographic variations, may be used for a communication between two respective components. Furthermore, the interaction between the components may be implemented as cyclic broadcast or multicast communication or a remote function call or an API call across software modules or in any other way that allows transfer of information between components.

In the exemplary embodiment displayed in FIG. 1, vehicle 100 may be an automobile, and possibly an automatic driving automobile, but in other embodiments, vehicle 100 may be an automatic driving vehicle 100, e.g. an autonomous driving vehicle, an autonomous drone, an autonomous plane or any other flying object, an autonomous bike, trike, or the like. The autonomous vehicle 100 may also be any kind of robot or moving hardware agent. Furthermore, it may be to be noted that the vehicle 100 does not necessarily need to be a fully autonomous vehicle, but can also be a partially autonomous vehicle or a vehicle in which implements the trajectory of motion determiner as part of the driver assistance systems.

In some embodiments, the vehicle 100 may be replaced with any device requiring a trajectory of motion determiner in a given area, such as surveillance drones which may monitor a specific location.

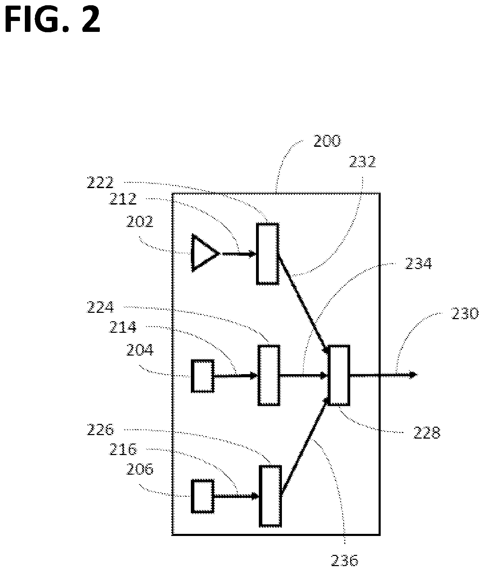

FIG. 2 shows a trajectory of motion determiner 200 that may determine a trajectory of motion across the predetermined region. The trajectory of motion determiner 200 may be functionally equivalent to the trajectory of motion determiner 102.

In some embodiments, the trajectory of motion determiner 200 may include at least one sensor 202, wherein the at least one sensor 202 may include Lidar sensors, Radar sensors, visual sensors, such as monocameras, or any other type of sensor.

In some embodiments, the sensors reach may determine the predetermined region wherein the predetermined region may be limited to the region within which at last one of the sensors may provide information. In other embodiments, the determination of the predetermined region may be established on the bases of other considerations.

The trajectory of motion determiner 200 may also include an occupancy hypothesis determiner 222 that may be configured to determine an occupancy hypothesis of the predetermined region. In some embodiments, the occupancy hypothesis determiner 222, may identify sub-regions of the predetermined region that may be occupied by static objects, such as buildings, that may persist to be occupied, and sub-regions of the predetermined region that may be occupied by dynamic objects such as vehicles., that may move away removing their occupation of the sub-region.

The occupancy hypothesis determiner 222 may also identify non-occupied sub-regions, in other words sub-regions that may be free of obstacles and that may be utilized by vehicle 100 to travel across the predetermined region.

The occupancy hypothesis determiner 222 may make its determination on the bases of information from sensors, such as the at least one sensor 202 received through the at least one connector 212. In some embodiments., the occupancy hypothesis determiner 222 may also perform sensor fusion; therefore, the occupancy hypothesis may be the result of the merging different types of information coming from different sensors.

The trajectory of motion determiner 200 may also include a utility value determiner 224 configured to determine a utility value of all sub-regions in the predetermined region. Specifically, the utility value determiner 224 may divide the predetermined region into sub-regions on the bases of some utility criteria wherein each some region of the predetermined region may be associated with one utility value.

In some embodiments, the utility value determiner 224 may divide the predetermined region into sub-regions on the bases of the route to its intended destination, wherein the sub-regions that are in the direction of the intended destination may receive a higher utility value than sub-regions that are in other directions.

In order to assign a utility to the sub-regions, the utility value determiner 224 may require as input an indication of the direction to the intended destination. Such indication of the direction of the intended destination, may be provided by a navigation system 204 through connector 214. The navigator system may be any navigation system with the functionalities of determining a route from a starting point to a destination and the additional functionality to provide local directions to indicate the way to reach the destination.

The trajectory of motion determiner 200 may also include a profile of motion indicator 226 configured to indicate the profile of motion of vehicle 100, wherein the profile of motion may indicate the values of motion parameters related the movements of vehicle 100 in a predetermined time interval.

In some embodiments, the motion parameters may include a velocity profile, an acceleration profile and a steering angle profile.

An exemplary profile of motion may indicate that in a predetermined time interval of 2 minutes, vehicle 100 turned in the left direction with a turning angle that progressively ranged from 8 to 15 grades, a velocity that progressively decreased from 35 to 25 km/h with a constant negative acceleration.

The profile of motion indicator 226 may receive data about the vehicle's motion parameters from one or more odometry sensors 206 through connector 216. In some embodiments, the odometry sensors may include an Inertial Measurement Unit (IMU) on the vehicle; in some embodiments, the odometry sensors may include sensors measuring the velocity of the wheels, and/or sensor measuring the acceleration produced by the engine and/or sensors measuring the steering angle of the wheels; in some embodiments, the odometry sensors may include other odometry estimates such as estimates with respect to landmarks positions or other types of estimates.

The trajectory of motion selector 228 may receive through connector 232 an occupancy hypothesis that may indicate the sub-regions of the predetermined region that are occupied by either static objects such as buildings, and dynamic objects such as vehicles. The occupancy hypothesis may also include indications of unoccupied sub-regions on which the vehicle may be able to drive.

In addition, the trajectory of motion selector 228 may receive through connector 234 an indication of the utility of the sub-regions of the predetermined region. By combining the unoccupied sub-regions and the utility values of the sub-regions of the predetermined region, the trajectory of motion selector 228 may determine the non-occupied sub-regions with higher utility, these sub-regions are the preferred sub-regions to be crossed by a trajectory of motion. More generally the combination of the unoccupied sub-regions and the utility values of the sub-regions of the predetermined region may result in a scoring of the unoccupied sub-regions indicating alternative options for a trajectory and scoring the alternatives with respect to the utility measure.

Finally, the trajectory of motion selector 228 may receive through connector 236 an indication of the profile of motion of the vehicle 100. By combining unoccupied regions scored with the utility function and the motion profile of vehicle 100, the trajectory of motion selector 228 may select a trajectory with high utility while controlling steering angles, velocities and accelerations along the trajectory.

The output of the trajectory of motion selector 228 may include a trajectory of motion and a plurality of position values, velocity values, acceleration values and steering angle values indicating how to drive along the trajectory. These outputs may be transmitted through connector 230 to other components. In some embodiments, connector 230 may be functionally equivalent to connector 132, in such embodiments, the trajectory of motion and the velocity values, acceleration values and steering angle values may result in indications to the automotive controller 114 that nay use them to control the behavior of vehicle 100.

In some embodiments of the trajectory of motion determiner 200, the utility value determiner 224 or the profile of motion indicator 226 may be missing providing alternative versions of the trajectory of motion determiner 200.

In some embodiments, the trajectory of motion determiner 200 may include only the occupancy hypothesis determiner 222 and the profile of motion indicator 226. In such embodiments, the direction of motion may have to be determined outside the trajectory of motion determiner 200. In some of such embodiments, the driver may be responsible for steering the vehicle, or at least indicating the direction of motion to the vehicle 100.

In some embodiments, the trajectory of motion determiner 200 may include only the occupancy hypothesis determiner 222 and the utility value determiner 224. In such embodiments, the profile of motion may have to be determined outside the trajectory of motion determiner 200. In some of such embodiments, the driver may be responsible for determining the velocity and acceleration of the vehicle, while the trajectory of motion determiner 200 may be responsible for the direction of motion of the vehicle 100.

In some embodiments, the trajectory of motion determiner 200 may be a single component including all sensors and IMU sensors; in other embodiments, the trajectory of motion determiner 200 may be distributed across the vehicle 100, wherein each component may be placed in the most appropriate place to perform its tasks. In some embodiments, the connectors 212, 214, 216, 232, 234, 236 may be implemented as a wired connection or a wireless connection. Any kind of communication protocol including vehicle bus networks such as Controller Area Network (CAN), Local Interconnected Network (LIN) bus, FlexRay, Media Oriented System Transport (MOST), and Automotive Ethernet, as well as cryptographic and non-cryptographic variations, may be used for a communication between two respective components. Furthermore, the interaction between the components may be implemented as cyclic broadcast or multicast communication or a remote function call or an API call across software modules or in any other way that allows transfer of information between components.

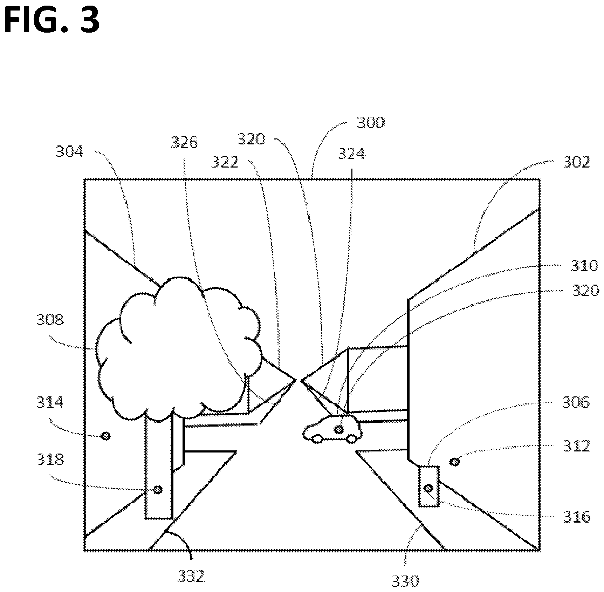

FIG. 3 shows an exemplary urban scene 300 that may indicate the road in front of vehicle 100. The urban scene 300 may include a first wall 302, a second wall 304, a tree 308 in front of the second wall 304, a first sidewalk 330, a second sidewalk 332, an object 306 on the first sidewalk and a vehicle 310. In addition, in the urban scene 300 signs 320 and 322, may indicate additional objects, such as exemplary walls while the signs 324 and 326 may indicate two additional sidewalks; finally, the urban scene 300 may represent an intersection delimited by walls indicated by 302, 304, 320, and 322.

The urban scene 300, FIG. 3 may also show a sample of a plurality of sensor readings represented by the dots 312, 314, 316, 318, 320. The sensor readings may have been detected by one or more sensors functionally equivalent to the at least one sensor 202. The sensor readings may relate to some of the objects in the urban scene 300. Each sensor reading may indicate the presence of an object in the predetermined region. As a way of example, sensor reading 312 may indicate the presence of the first wall 302, sensor reading 314 may indicate the presence of the second wall 304, sensor reading 316 may indicate the presence of the object 306, sensor reading 318 may indicate the presence of the tree 308 and sensor reading 320 may indicate the presence of the vehicle 310.

Each sensor reading may also provide additional information about the objects detected such as velocity estimates or object type estimates. As a way of example, sensor reading 320 may indicate the distance from vehicle 310, the velocity of vehicle 310, in some cases the type of the object detected, such as for example that vehicle 310 is a car.

The sensor readings may be transmitted from one or more sensors, for example the at least one sensor 202, to an occupancy hypothesis determiner that may be configured to determine an occupancy hypothesis of the predetermined region wherein such determination may depend on the sensor readings received from the sensors.

In some embodiments, the occupancy hypothesis may be a dynamic occupancy grid (DOG) wherein the dynamic occupancy grid may provide a way to model the space in the predetermined region wherein sensor readings are transformed in particles that are placed in the DOG and then abstracted to recognize free space, static obstacles, and dynamic, i.e. moving, objects. In some embodiments, the dynamic occupancy grid may be interpreted as a map of the predetermined region representing both the static features such as walls, and temporary barriers, and dynamic features such as moving vehicles.

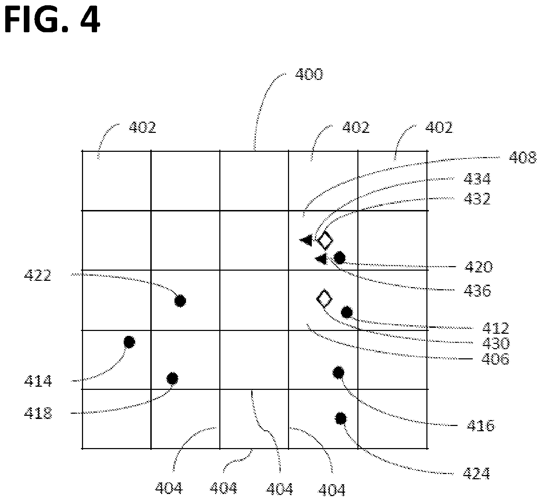

FIG. 4 shows an exemplary dynamic occupancy grid 400 including a plurality of grid cells 402. Each grid cell 402 may be framed by respective grid cell frame lines 404. In some embodiments, the grid cells may be square or rectangular, in other embodiments grid cells may assume other shapes.

In some embodiments, the dynamic occupancy grid may provide a representation of the predetermined region, wherein the predetermined region may comprise the area of all the cells that are part of the grid. In some embodiments, the predetermined region may be contiguous: in such embodiments, cells may be placed next to each other, as in the case of grid 400, in other embodiments the dynamic occupancy grid may be fragmented to capture special requirements. In some embodiments, each grid cell may represent a sub-region of the predetermined region, in other embodiments, clusters of cells may represent sub-regions of the predetermined region.

The size of the grid cells may vary: exemplary values for the grid cells size may range from a size of a few square centimeters, to a size of a few squared meters. In some embodiments, smaller grid cells may tend to result in higher representation resolution. In some exemplary embodiments, the dynamic occupancy grid may have cells of different sizes wherein the grid cells may be smaller in some areas of the grid, which may represent sub-regions of the predetermined region for which a higher representation resolution is required, and bigger in other areas for which a lower representation resolution may be required.

In some exemplary embodiments vehicle 100 may be placed in the center of the dynamic occupancy grid, and therefore at the center of the predetermined area. The cells closer to vehicle 100 may be smaller than the cells in relation to the cells at the edge of the dynamic occupancy grid since less resolution is required closer to the vehicle to better control its movements. In other exemplary embodiments, the cells closer to the front and the sides of the vehicle may be smaller than the cells behind the vehicle.

The predetermined region of a dynamic occupancy grid may be a region around the vehicle 100. In some embodiments, the vehicle 100 may be positioned in the center of the occupancy grid and the predetermined region may be a region equally distributed around the vehicle. In other embodiments, vehicle 100 may be positioned at the side of the dynamic occupancy grid, or equivalently at the side of the predetermined region, to accommodate the requirement that more information may be required on one side of the vehicle. In some embodiments, vehicle 100 may be outside the dynamic occupancy grid. In some embodiments, the dynamic occupancy grid may move with vehicle 100.

Grid cells may be associated with particles, wherein each particle may represent one or more sensor readings, such as the exemplary sensor readings 312, 314, 316, 318, 320, that may have detected objects present in the area represented by the grid cell. Through the placement of particles, a dynamic occupancy grid may provide information about the location of objects within the predetermined region. A dynamic occupancy grid may be thought as a dynamic map of the predetermined region, alternatively a dynamic occupancy grid may be thought as providing an occupancy hypothesis of the predetermined region.

Signs 412, 414, 416, 418, 420, 422, 424 may represent particles that may be positioned in the occupancy grid 400. As a way of example, the particle 412 may have been generated from the information associated with sensor reading 312 and it may represent part of the first wall 302 in the dynamic occupancy grid; particle 414 may have been generated from the information associated to the sensor reading 314 and it may represent part of the second wall 304; the particle 420 may have been generated from the information associated to the pixel 320 and it may represent part of the vehicle 310.

In some embodiments, the particles indicated by 412, 414, 416, 418, 420, 422, 424 may represent sensors readings detected by different sensors, nevertheless they all provide evidence of obstacles that may occupy the predetermined region. By transforming all sensors readings in particles dynamic occupancy grids may provide a sensor fusion function.

In some embodiments, objects such as the first wall, the second wall and the vehicle, may be represented by a plurality of particles. In some embodiments, such plurality of particles may comprise a large number of particles. In some embodiments, the number of particles generated may depend on the quality of the sensor, wherein high-resolution sensors may generate a larger number of particles; the number of particles may also depend on resource considerations wherein a larger number of particles may require a larger amount of resources; finally, the number of particles may depend on the resolution required, wherein a larger number of particles may lead to a higher resolution.

Particles may also be associated with a velocity which may be represented by a direction of motion and by a speed value. Particles associated with a non-zero velocity may be indicated as dynamic particles, while particles associate with zero velocity may be indicated as static particles. As a way of example, particle 420, representing part of the vehicle 310, may be a dynamic particle with non-zero velocity in the direction indicated by arrow 436; while particles 412 and 414, both of which represent parts of walls may be static particles with zero velocity.

In addition to particles, dynamic occupancy grids may also associate to each cell a single occupancy hypothesis wherein each single occupancy hypothesis may provide an indication of the level of occupation of the associated cell. Each single occupancy hypothesis may provide additional information such as the cell velocity, or the type of occupation. In some embodiments, a single occupancy hypothesis may also provide a measure of the likelihood, or of the belief, that the cell is occupied, and a measure of the velocity associated with the occupation of the cell.

The shape 430 may represent an exemplary single occupancy hypothesis associated to cell 406, wherein a single occupancy hypothesis may provide an indication of the level of occupation of a cell, of the cell velocity, and of the type of occupation. The exemplary cell 406 may include particles that, like particle 412, may refer to wall 302, therefore most or all particles in the cell may have 0 or near 0 velocities. As a consequence, the single occupancy hypothesis 430 may indicate that the corresponding cell may have 0 velocity, in other words that the cell is static. Similarly, shape 432 may represent an exemplary single occupancy hypothesis for cell 408. Cell 408 may include particles that, like particle 420, may refer to vehicle 310, therefore most or all particles cell 408 may be dynamic reflecting the velocity of vehicle 310. The arrow 434 may indicate the direction of motion associated with the non-zero velocity of the single occupancy hypothesis 430.

In some embodiments, a single occupancy hypothesis, such as single occupancy hypothesis 430 and 432, may be determined using the belief mass function, wherein the belief mass of occupation of a cell may be defined as the proportion of particles in the cell with respect to all particles in the dynamic occupancy grid. The belief mass of the velocity may be computed from the distribution of velocities associated with the particles in the cell.

In some embodiments, the belief mass function may indicate occupation information specifying whether the occupation of the corresponding cell is static or dynamic, or free space or whether the occupation information is unknown, possibly because other objects prevent sensors for reading the occupation in those cells. Using the Dempster-Shafer theory of evidence the belief mass function may be reduced to a $2^\Theta$ frame of discernment, wherein

$$\Theta = \{F, S, D\}$$

wherein

*F* indicates free space;(1)
*S* indicates static space;
*D* indicates dynamic space.

$$2^\Theta = \{\emptyset, \{S\}, \{D\}, \{F\}, \{S, D\}, \Theta\}$$

is the set of possible combination of values,
wherein:

Ø indicates lack of information;
{S} indicates static occupancy;
{D} indicates dynamic occupancy
{F} indicates free occupancy;
{S, D} indicates inability to discriminate between Static or Dynamic occupancy;
Θ indicates the remaining uncertainty.
{S, F} and {D, F} are not considered because they are not consistent.

Given the frame of discernment as described in (1), in some embodiments, the belief mass function used to determine the single occupancy hypothesis may be determined in accordance with the following formula:

$$m_s^i(\{S, D\}) = m_{s_1}^i(\{S, D\}) \oplus m_{s_2}^i(\{S, D\}) \oplus \dots \oplus m_{s_n}^i(\{S, D\}) \tag{2}$$

wherein

$m_{s_n}^i(\{S, D\})$ may be the mass belief of the i-th cell;
$\oplus$ may be an evidence combination operator, in some embodiments, $\oplus$ may indicate the Dempster Shafer evidence combination operator;
S may be an indication that the particles in the cell are static;
D may be an indication that the particles in the cell are dynamic;
$s_i$ may indicate the i-th sensor.

Formula (2) may provide a way to determine the belief mass of occupation of cells on the bases of the position value assigned to the particles, while keeping into account technical differences between the sensors.
A formula analogous to formula (2) may indicate how to determine the mass belief for other cases as well as for other information such as velocity associated with a cell.
In some embodiments, the degree of belief that the grid cell $C_i$ is occupied may be computed by the belief function that may be analogous to the following formula (3)

$$m_s^i(\{S, D\}) = \max_j \left( m_{occ} * e^{-\frac{(\mathbf{x}^i - \mathbf{z}_t^j)^2}{2*\sigma^2}} \right) \tag{3}$$

wherein:

{S, D} is the type of occupancy of the grid cell wherein:

S indicates static occupancy;
D indicates dynamic occupancy;

$m_{occ}$ is the maximum evidence for occupied; it is constant in the range [0:1];
$i$ is the grid cells index;
$j$ s the sensor readings index;
$t$ is a time reading index;

$e^{-\frac{(\mathbf{x}^i - \mathbf{z}_t^j)^2}{2\sigma^2}}$ is a Gaussian function wherein:

$x^i$ is the center of the i-th grid cell;
$z_t^j$ is the position of the j-th sensor reading at time t;

$\sigma$ is a parameter determining the slope of the Gaussian.

In formula (3), the Gaussian function acts as a discount factor wherein the measurements $z_j^i$ that are further from $x^i$ provide a reduced contribution to the occupancy of grid cell $i$; furthermore the use of the $max_j$ function selects the sensor $j$ measurement that contributes the most to a grid cell, removing the contribution of all the others. Finally, it should be observed that formula (3) returns values that are included between 0 and 1. In other words, the contribution of a sensor information value to the degree of belief of occupancy of the grid cell $i$ substantially decreases with an increase of a distance of the location of the object detected by the sensor from $x^i$.

In some embodiments, the value $\sigma$ in formula (3) may be related to the standard deviation of the values of $x$ with respect to $z$. In such cases, $m_s^i(\{S, D\})$ may have mathematical properties of the probabilistic normal distribution.

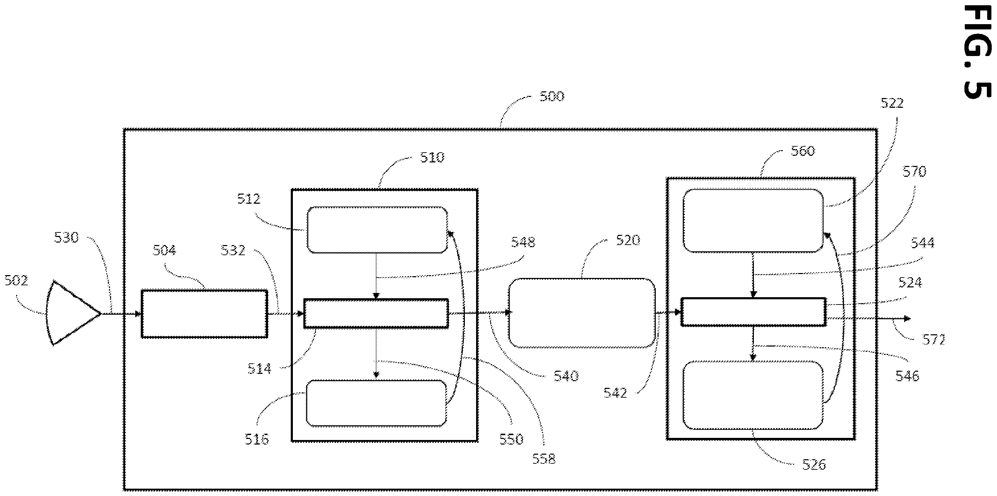

FIG. 5 shows an embodiment of an occupancy hypothesis determiner 500 that may be functionally equivalent to the occupancy hypothesis determiner 222.

In FIG. 5, signs 500, 504, 510, 514, 560, and 524 represent processes; while signs 512, 516 520 522 and 526 represent data. The interpretation of the connectors changes consequently. Connectors connecting processes may represent data flow and/or control flow; connectors connecting processes and data may indicate input/output relations; connectors connecting data may indicate data transformations which in some embodiments may simply be data identity or data assignment.

In FIG. 5, the sign 502 may represent at least one sensor that may be functionally equivalent to the at least one sensor 202. Connector 530 may represent the input of the occupancy hypothesis determiner 500. Connector 530 may be functionally equivalent to connector 212.

In 504, the occupancy hypothesis determiner 500 may compute a sensors-based dynamic occupancy grid which may be functionally equivalent to the exemplary occupancy grid 400. In some embodiments, the determination of the sensors-based dynamic occupancy grid may also involve the determination of the belief masses corresponding to each cell of the sensors-based dynamic occupancy grid, wherein the determination of the belief masses may be performed in accordance with formula (2).

In some embodiments, sensors may produce faulty readings which may result in erroneous particles to be added to the dynamic occupancy grid. Faulty particles may need to be removed from the dynamic occupancy grid to improve its accuracy.

The occupancy hypothesis determiner 500 may improve the dynamic occupancy grid through two filter processes. The first filter 514 may be a particle filter, the second filter 560 may be based on the Dempster Shafer theory of evidence.

The particle filter 510 may be defined as a process wherein a first dynamic occupancy grid 512 may be transmitted through connector 548 to a mapping process 514 to generate a second updated, dynamic occupancy grid 516 transmitted through connector 550. Specifically, the generation of the second updated dynamic occupancy grid 516 involves the injection in the first dynamic occupancy grid 512 of additional particles that may be coming from the sensors-based dynamic occupancy grid 504 transmitted to the particle filter through connector 532 and a projection and a re-sampling process to filter out particles that may result from sensor errors. The connector 558 may indicate that the second dynamic occupancy grid may become the first dynamic occupancy grid of the next iteration of the process. In some embodiments, connector 558 may be implemented as a variable assignment.

The result of the particle filtering, indicated by connector 540, may be an evidence-based dynamic occupancy grid 520, wherein the evidence particle map 520 may be a dynamic occupancy grid wherein each cell of dynamic occupancy grid is associated with a mass belief of the type of occupation of the cell in the dynamic occupancy grid.

In some embodiments, the evidence-based dynamic occupancy grid 520 may be functionally equivalent to the second updated dynamic occupancy grid 516.

In some embodiments, the evidence-based dynamic occupancy grid 520 may differ from the second updated dynamic occupancy grid 516 in that the values of each cell of the dynamic occupancy grid may indicate the belief masses associated with the cell determined in accord with formula (2).

The evidence-based dynamic occupancy grid 520 may contain incorrect belief estimates that may be due to incorrect sensor readings. In some embodiments, the estimates in the evidence-based dynamic occupancy grid 520 may be further improved by the Dempster Shafer filter 560 based on a Dempster Shafer map process 524.

The Dempster Shafer map process 524 may transform a first evidence-based dynamic occupancy grid 522 received through connector 544, to output a second evidence-based dynamic occupancy grid 526 as indicated by connector 546 through the inclusion of information from the evidence-based dynamic occupancy grid 520 received through connector 542. The second evidence-based dynamic occupancy grid 526 may be the output of filter 560 and of the occupancy hypothesis determiner 500.

The connector 570 may indicate that the second evidence-based dynamic occupancy grid 526 may become the first evidence-based dynamic occupancy grid 522 of the next iteration of the process. In some embodiments, connector 570 may be implemented as a variable assignment.

In some embodiments, the Dempster Shafer map process 524 may be defined according to the Dempster-Shafer theory of evidence, wherein the frame of discernment may be defined according to formulae (1).

The Dempster Shafer map process 524 may be based on the following formulae (4).

$$m_{t-1}(F) = m_{t-1}(F) + m_{t-1}(D)$$
$$m_{t-1}(D) = 0 \qquad\qquad (4)$$

wherein

$m_{t-1}$ indicates the belief masses of the first evidence-based dynamic occupancy grid 522;
$m_{t-1}(F)$ indicates the belief masses of free cells;
$m_{t-1}(D)$ indicates the belief masses of dynamic cells;

Formulae (4) assumes that from time $t$ - 1 to t all dynamic objects, such as vehicles, represented in the first evidence-based dynamic occupancy grid by the mass belief $m_{t-1}(D)$ may have moved away and the corresponding space have been freed. Therefore, there is no more evidence of any dynamic object.

Formulae (5) below may specify the belief masses of the second evidence-based dynamic occupancy grid wherein the evidence for dynamic objects comes from the evidence-based dynamic occupancy grid 520 while the other belief masses are updated accordingly.

$$m_t(D) = m_s(D)$$
$$m_t(X)_{X \subseteq \Theta \backslash \{D,\emptyset\}} = w \frac{m_{t-1}(X)m_s(\Theta) + m_{t-1}(\Theta)m_s(X)}{m_{t-1}(\Theta) + m_s(\Theta) - m_{t-1}(\Theta)m_s(\Theta)}$$
$$m_t(\Theta)_{X \subseteq \Theta \backslash \{D,\emptyset\}} = w \frac{m_{t-1}(\Theta)m_s(\Theta)}{m_{t-1}(\Theta) + m_s(\Theta) - m_{t-1}(\Theta)m_s(\Theta)} \qquad (5)$$
$$w = \frac{\left(1 - m_s(D)\right)m_{t-1}(\Theta) + m_s(\Theta) - m_{t-1}(\Theta)m_s(\Theta)}{\sum_{X \subseteq \Theta \backslash \{D,0\}} m_{t-1}(X)m_s(\Theta) + m_{t-1}(\Theta)m_s(X)}$$

wherein

$m_{t-1}$ indicates the belief masses of the first evidence-based dynamic occupancy grid 522;
$m_t$ indicates the belief masses of the second evidence-based dynamic occupancy grid 526;
$m_s$ indicates the belief masses of the evidence-based dynamic occupancy grid 520;
$\Theta$ is the set defined in (1);
$D$ indicates dynamic space;
$\emptyset$ indicates the empty set;
$X \subseteq \Theta \backslash \{D, \emptyset\}$ is defined as the set $\Theta$ with the exclusion of $D$ and $\emptyset$.

The output connector 572, which may be functionally equivalent to connector 214 in FIG. 2, may indicate that at each time instance $t$ the second evidence-based dynamic occupancy grid may be transmitted to other components as the estimate of the occupation in the predetermined area. In some embodiments, the second evidence-based dynamic occupancy grid may indicate the occupancy around vehicle 100.

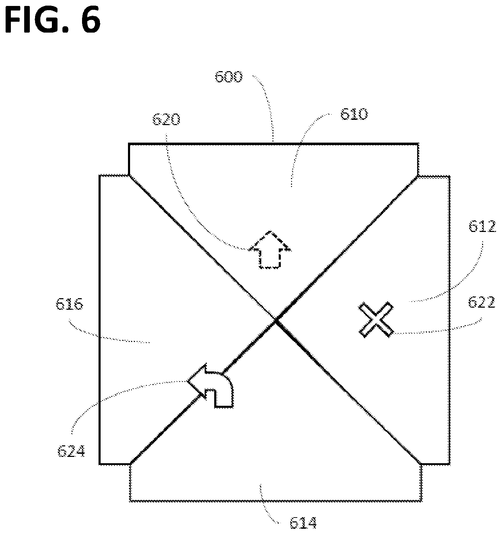

FIG. 6 shows an exemplary utility value determination 600 associated with exemplary navigation indications 620, 622, 624, indicating alternative directions to cross an exemplary intersection.

The exemplary utility value determination 600 may indicate that the exemplary intersection is divided into 4 sub-regions: a first sub-region 614, which may also be the sub-region from where vehicle 100 is coming from; a second sub-region 616 which may also be the sub-region indicated by the navigation system as the best direction of motion, as indicated by the arrow 624; a third sub-region 610 which may also be the sub-region indicated by the navigation system as an alternative direction of motion as indicated by the dotted arrow 620; and a fourth sub-region 612 which may also be the sub-region indicated by the navigation system as a wrong direction of motion as indicated by the cross sign 622.

In some embodiments, navigation systems may not indicate wrong directions but rather indicate that there are no alternative directions of motion crossing the specific sub-region. Such indication may be interpreted by a utility value determiner equivalently to the cross sign indication 622.

The utility value determination 600 may have been determined by a utility value determiner, functionally equivalent to the utility value determiner 224, wherein the utility value determiner may assign the higher utility value to region 616 since crossing region 616 may lead directly towards the destination, as indicated the arrow 624 The utility value determiner may assign a lower utility value to region 610 since crossing region 610 may still lead to the destination, as indicated by the dotted arrow 620, but it may involve a detour; as such it may not be the preferred route. The utility value determiner may assign the lowest utility value, and possibly a negative utility value, to region 622 since crossing region 622 may not lead to the destination but rather in the opposite direction.

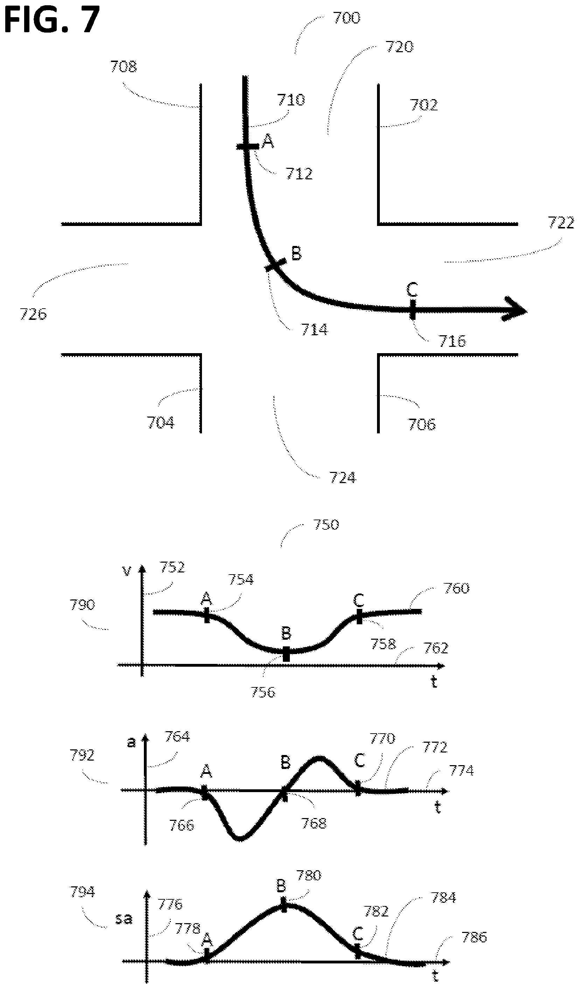

FIG. 7 shows a diagram 700 illustrating an exemplary direction of motion and an exemplary motion profile 750. In diagram 700, the signs 702, 704, 706, and 708 show the boundaries of statically or dynamically occupied space, such as the boundaries of exemplary buildings, the space between the signs 702, 704, 706, and 708, indicated as 720, 722, 724, 726, may be unoccupied space on which may indicate an exemplary intersection. The line 710 may indicate the trajectory traveled by the exemplary vehicle 100 while crossing the intersection. The lines 712, 714, 716 indicated by the labels A, B and C respectively, may indicate points along the trajectory 710.

Diagram 750 shows an exemplary motion profile including an exemplary velocity profile illustrated in diagram 790 indicating velocity values, an exemplary an acceleration profile illustrated in diagram 792 indicating the acceleration values, and an exemplary a steering angle profile illustrated in diagram 794 indicating the steering angle values.

The velocity profile in 790 is illustrated by the curve 760 representing the velocity with respect to time, wherein the velocity values are represented by the axis 752 labeled "v" and the time is represented by the axis 762 labeled as "t". The point 754 labeled as "A" may correspond to point 712 in diagram 700; the point 756 labeled as "B" may correspond to point 714 in diagram 700; the point 758 labeled as "C" may correspond to point 716 in diagram 700. The velocity profile in 790 shows that the velocity decreased as the vehicle entered a curve in point A 754, reached a minimum value as the vehicle reached point B 756 and increased again until the vehicle reached point C 758 and then stabilized on a constant velocity.

The acceleration profile in 792 is illustrated by the curve 772 representing the acceleration with respect to time, wherein the acceleration values are represented by the axis 764 labeled "a" and the time is represented by the axis 774 labeled as "t". The point 766 labeled as "A" may correspond to point 712 in diagram 700; the point 768 labeled as "B" may correspond to point 714 in diagram 700; the point 770 labeled as "C" may correspond to point 716 in diagram 700. The acceleration profile in 792 shows that the acceleration decreased to negative values as the vehicle entered a curve in point A 754 indicating that the vehicle is breaking, reached a minimum value and then increased reaching the 0 value as the vehicle reached point B 756 indicating that the vehicle is no longer breaking, and then increased reaching a maximum value and the decreased again until the vehicle reached point C, 770, and then stabilized around a value of 0 acceleration indicating constant velocity.

The steering angle profile in 794 is illustrated by the curve 784 representing the steering angle with respect to time, wherein the steering angle values are represented by the axis 776 labeled "sa" and the time is represented by the axis 786 labeled as "t". The point 778 labeled as "A" may correspond to point 712 in diagram 700; the point 780 labeled as "B" may correspond to point 714 in diagram 700; the point 782 labeled as "C" may correspond to point 716 in diagram 700. The steering angle profile in 792 shows that the steering angle increased as the vehicle entered a curve in point A 778, reached a maximum steering angle value in point B 780, and then decreased the steering angle reaching a minimum value of 0 when the vehicle reached point C 758 wherein 0 indicates that the vehicle drives in a straight line.

In the embodiment described above, the velocity, acceleration and steering angle profiles were represented using charts in Cartesian coordinates, in other embodiments other representations may be used. In some embodiments, the representation of the motion parameter profiles may be based on a representation of the direction of motion and the motion parameters may be represented as color variations overlapped on the trace sign.

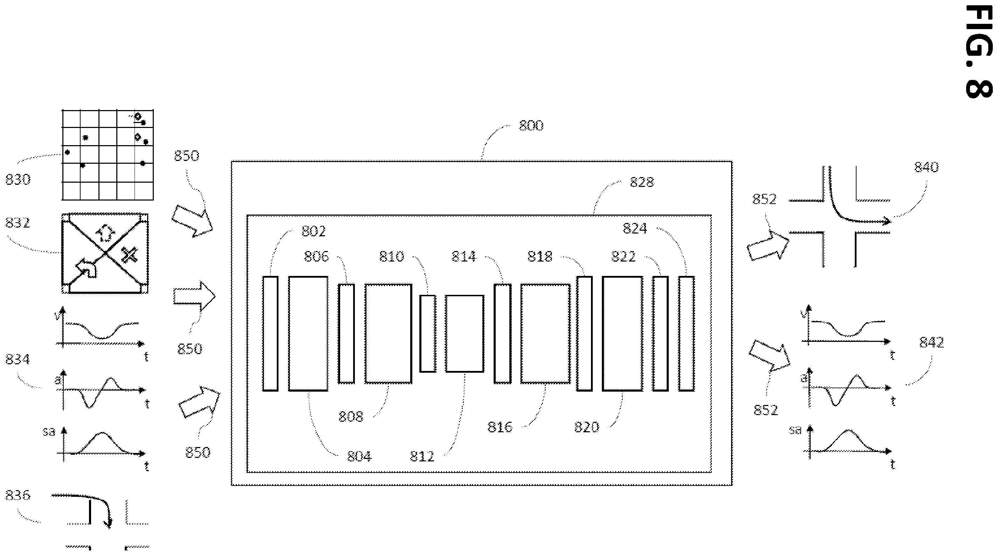

FIG. 8 shows an exemplary trajectory of motion selector 800 that may be functionally equivalent to 228. The trajectory of motion selector 800 may receive as inputs, as shown by the arrows 850, a dynamic occupancy grid 830, that may be functionally equivalent to the dynamic occupancy grid 400; a utility value determination 832 that may be functionally equivalent to the utility value determination 600 indicating a utility assignment to all sub-regions in the predetermined region received from a utility value determiner that may be functionally equivalent to 224; a plurality of motion parameters profiles 834 that may be functionally equivalent to the motion parameters profiles 750, and an indication of the previous direction of motion that may be functionally equivalent to the direction of motion 700.

The output of the trajectory of motion selector 800 is indicated by the arrows 852 and it may include a trajectory of motion 840 and a plurality of velocity values, acceleration values and steering angle values 842 indicating the trajectory and constraints on how to drive along the trajectory 840.

The trajectory of motion 840 generated by the trajectory of motion selector 800 may tend to maximize the utility of the trajectory wherein the utility of the trajectory may depend on the utility associated with the sub-regions that are crossed by the trajectory. In some exemplary embodiments, the utility of a trajectory may be defined as the sum of the utilities of the sub-regions crossed by the trajectory.

In some embodiments, the trajectory of motion selector 800 may be a neural network which may encode in the input layer 802 the inputs of the trajectory of motion selector 800, wherein in some embodiments the inputs may be encoded as images.

In the embodiments, in which the trajectory of motion selector 800 is a neural network, the outputs of the trajectory of motion selector may be encoded in the output layer of the neural network, wherein in some embodiments the outputs may be encoded as images in the output layer.

In some embodiments, the trajectory of motion selector 800 may be a fully convolutional neural network 828 which in addition to the input layer 802 and the output layer 824 may include sets of convolution layers 804, 812, 816, 820, pooling layers 806 and 810 max unpooling layers 814 and 818, and at least one softmax layer 822.

In some embodiments, the trajectory of motion selector 800 may also contain recurrent layers, not shown, which may be configured as Long Short-Term Memory layers.

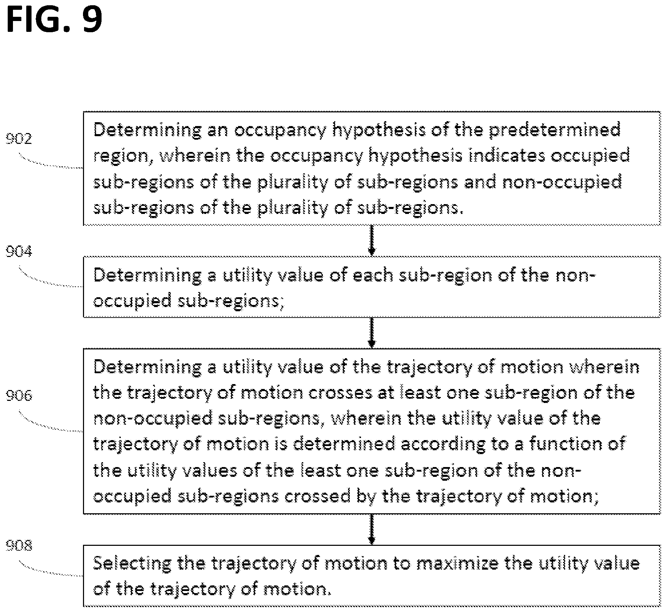

FIG. 9 shows a method to determine a trajectory of motion of a vehicle in a predetermined region, wherein the predetermined region comprises a plurality of sub-regions.

In 902, an occupancy hypothesis of the predetermined region is determined, wherein the occupancy hypothesis indicates occupied sub-regions of the plurality of sub-regions and non-occupied sub-regions of the plurality of sub-regions.

In 904, a utility value of each sub-region of the non-occupied sub-regions is determined.

In 906, a utility value of the trajectory of motion is determined, wherein the trajectory of motion crosses at least one sub-region of the non-occupied sub-regions, wherein the utility value of the trajectory of motion is determined according to a function of the utility values of the least one sub-region of the non-occupied sub-regions crossed by the trajectory of motion; wherein the utility value of each sub-region of the non-occupied sub-regions is further determined according to an intended direction of motion of the vehicle.

In 908, a trajectory of motion to maximize the utility value of the trajectory of motion is selected.

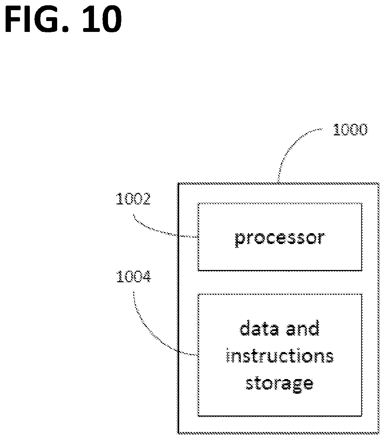

FIG. 10, shows a non-transient computer readable medium 1000 storing a computer program in a data and instructions storage 1004 which, when executed by a processor 1002, implements a method 900 to determine a trajectory of motion in a predetermined region

The non-transient computer-readable medium 1000 may include a plurality of processors 1002 and/or one or a plurality of controllers, now shown. Each processor or controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It may be understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The computer-readable medium 1000 may also be a virtualized device which may be executed by one or more physical devices. In addition, the computer readable medium may be a network device residing in a cloud, or it may be configured to execute some functions in the cloud for example through remote API calls.

**Claims**

1. A method of determining a trajectory of motion of a vehicle (100) in a predetermined region, wherein the predetermined region comprises a plurality of sub-regions, the method being executed by one or more processors (1002), the method comprising

   determining (902) an occupancy hypothesis of the predetermined region, wherein the occupancy hypothesis indicates occupied sub-regions of the plurality of sub-regions and non-occupied sub-regions of the plurality of sub-regions;
   determining (904) a utility value for each sub-region of the predetermined region;
   determining (906) the trajectory of motion which crosses at least one sub-region of the non-occupied sub-regions, based on a function of the utility values of the least one sub-region of the non-occupied sub-regions crossed by the trajectory of motion and by maximizing a utility of motion of the vehicle (100), wherein the utility of motion of the vehicle (100) is indicated by a function of the utility values of the sub-regions crossed by the trajectory of motion; wherein the utility value of each sub-region of the non-occupied sub-regions is further determined according to an intended direction of motion of the vehicle (100).

2. The method of claim 1,
   wherein the intended direction of motion of the vehicle (100) is determined by a navigation system.

3. The method of any one of claims 1 or 2,

wherein the occupancy hypothesis of the predetermined region is a dynamic occupancy grid including a plurality of grid cells.

4. The method of claim 3,
wherein each grid cell of the plurality of grid cells is associated with a single occupancy hypothesis comprising at least a measure of occupation likelihood and a measure of occupation velocity.

5. The method of claim 4,
wherein the single occupancy hypothesis is determined according to sensor readings; wherein preferably the single occupancy hypothesis is further determined according to a particle filter (510) or according to a Dempster Shafer filter (560).

6. The method of any one of claims 1 to 5,

wherein the trajectory of motion comprises a profile of motion;
wherein a profile of motion comprises a plurality of velocity values, a plurality of acceleration values and a plurality of steering angle values.

7. The method of claim 6,
wherein determining the trajectory of motion in a predetermined region further comprises indicating a first profile of motion and selecting the trajectory of motion further comprising determining the trajectory profile of motion from the first profile of motion.

8. The method of claim 7,
wherein determining the trajectory profile of motion from the first profile of motion further includes determining the plurality of velocity values associated with the profile of motion of the trajectory of motion from the plurality of velocity values in the first profile of motion, determining the plurality of acceleration values associated with the profile of motion of the trajectory of motion from the plurality of acceleration values in the first profile of motion, and determining the plurality of acceleration values associated with the profile of motion of the trajectory of motion from the plurality of acceleration values the first profile of motion.

9. The method of any one of claims 1 to 8,
wherein the trajectory of motion is selected according to a trainable model.

10. The method of claim 9,

wherein the trainable model comprises an artificial neural network;
wherein further preferably inputs of the trainable model are configured to receive the occupancy hypothesis of the predetermined region, the utility value of each sub-region of the non-occupied sub-regions, the plurality of velocity values, the plurality of acceleration values and the plurality of steering angle values associated with the past trajectory of motion; or
wherein further preferably an input layer of the trainable model comprises at least five channels, wherein a first channel of the at least five channels is an image representing the occupancy hypothesis of the predetermined region, wherein a second channel of the at least five channels is an image representing the utility value of each sub-region of the non-occupied sub-regions, wherein a third channel of the at least five channels is an image representing the plurality of velocity values associated with the past trajectory of motion, wherein a fourth channel of the at least five channels is an image representing the plurality of acceleration values associated with the past trajectory of motion, and wherein a fifth channel of the at least five channels is an image representing the plurality of steering angle values associated with the past trajectory of motion;
wherein further preferably an output of the trainable model is the future trajectory of motion associated with the plurality of velocity values, the plurality of acceleration values and the plurality of steering angle values associated with the future trajectory of motion.

11. The method of any one of claims 1 to 10,
wherein the function of the utility values of the sub-regions crossed by the trajectory of motion includes a sum of the utility values of the sub-regions crossed by the trajectory of motion.

12. The method of claim 11,

wherein the function of the utility values of the sub-regions crossed by the trajectory of motion includes an average of the utility values of the sub-regions crossed by the trajectory of motion.

13. A device of determining a trajectory of motion of a vehicle (100) in a predetermined region, wherein the predetermined region comprises a plurality of sub-regions, the device comprising

one or more processors (1002),
an occupancy hypothesis determiner (222) configured to determine an occupancy hypothesis of the predetermined region, wherein the occupancy hypothesis indicates occupied sub-regions of the plurality of sub-regions and non-occupied sub-regions of the plurality of sub-regions;
a utility value determiner (224) configured to determine a utility value for each sub-region of the predetermined region;
a trajectory of motion determiner (200) configured to determine the trajectory of motion which crosses at least one sub-region of the non-occupied sub-regions, based on a function of the utility values of the least one sub-region of the non-occupied sub-regions crossed by the trajectory of motion and by maximizing a utility of motion of the vehicle (100), wherein the utility of motion of the vehicle (100) is indicated by a function of the utility values of the sub-regions crossed by the trajectory of motion;
wherein the utility value of each sub-region of the non-occupied sub-regions is further determined according to an intended direction of motion of the vehicle (100).

14. A vehicle (100) comprising
a device of determining of a trajectory of motion in a predetermined region of claim 13.

15. A non-transient computer readable medium (1000) storing a computer program which, when executed by a processor (1002), implements a method of determining a trajectory of motion in a predetermined region, wherein the predetermined region comprises a plurality of sub-regions of any one of claims 1 to 12.


**Patentansprüche**

1. Verfahren zum Bestimmen einer Bewegungstrajektorie eines Fahrzeugs (100) in einer vorbestimmten Region, wobei die vorbestimmte Region eine Vielzahl von Unterregionen umfasst, wobei das Verfahren von einem oder mehreren Prozessoren (1002) ausgeführt wird, wobei das Verfahren Folgendes umfasst

Bestimmen (902) einer Belegungshypothese der vorbestimmten Region, wobei die Belegungshypothese belegte Unterregionen der Vielzahl von Unterregionen und nicht belegte Unterregionen der Vielzahl von Unterregionen anzeigt;
Bestimmen (904) eines Nutzwertes für jede Unterregion der vorbestimmten Region;
Bestimmen (906) der Bewegungstrajektorie, die mindestens eine Unterregion der nicht belegten Unterregionen kreuzt, auf Basis einer Funktion der Nutzwerte von mindestens einer Unterregion der nicht belegten Unterregionen, die von der Bewegungstrajektorie gekreuzt wird, und durch Maximieren eines Nutzens der Bewegung des Fahrzeugs (100), wobei der Nutzen der Bewegung des Fahrzeugs (100) durch eine Funktion der Nutzwerte der Unterregionen, die von der Bewegungstrajektorie gekreuzt werden; angezeigt wird, wobei der Nutzwert von jeder Unterregion der nicht belegten Unterregionen ferner gemäß einer vorgesehenen Bewegungsrichtung des Fahrzeugs (100) bestimmt wird.

2. Verfahren nach Anspruch 1,
wobei die vorgesehene Bewegungsrichtung des Fahrzeugs (100) durch ein Navigationssystem bestimmt wird.

3. Verfahren nach einem der Ansprüche 1 oder 2,
wobei die Belegungshypothese der vorbestimmten Region ein dynamisches Belegungsraster ist, das eine Vielzahl von Rasterzellen beinhaltet.

4. Verfahren nach Anspruch 3,
wobei jede Rasterzelle der Vielzahl von Rasterzellen mit einer einzelnen Belegungshypothese verknüpft ist, die mindestens ein Maß einer Belegungswahrscheinlichkeit und ein Maß einer Belegungsgeschwindigkeit umfasst.

5. Verfahren nach Anspruch 4,

wobei die einzelne Belegungshypothese gemäß Sensoraufzeichnungen bestimmt wird;
vorzugsweise wobei die einzelne Belegungshypothese ferner gemäß einem Partikelfilter (510) oder gemäß einem Dempster-Shafer-Filter (560) bestimmt wird.

6. Verfahren nach einem der Ansprüche 1 bis 5,

wobei die Bewegungstrajektorie ein Bewegungsprofil umfasst;
wobei ein Bewegungsprofil eine Vielzahl von Geschwindigkeitswerten eine Vielzahl von Beschleunigungswerten und eine Vielzahl von Lenkwinkelwerten umfasst.

7. Verfahren nach Anspruch 6,
wobei das Bestimmen der Bewegungstrajektorie in einer vorbestimmten Region ferner das Anzeigen eines ersten Bewegungsprofils umfasst und das Auswählen der Bewegungstrajektorie ferner das Bestimmen des Bewegungstrajektorienprofils anhand des ersten Bewegungsprofils umfasst.

8. Verfahren nach Anspruch 7,
wobei das Bestimmen des Bewegungstrajektorienprofils anhand des ersten Bewegungsprofils ferner das Bestimmen der Vielzahl von Geschwindigkeitswerten, die mit dem Bewegungsprofil der Bewegungstrajektorie verknüpft sind, anhand der Vielzahl von Geschwindigkeitswerten im ersten Bewegungsprofil, das Bestimmen der Vielzahl von Beschleunigungswerten, die mit dem Bewegungsprofil der Bewegungstrajektorie verknüpft sind, anhand der Vielzahl von Beschleunigungswerten im ersten Bewegungsprofil und das Bestimmen der Vielzahl von Beschleunigungswerten, die mit dem Bewegungsprofil der Bewegungstrajektorie verknüpft sind, anhand der Vielzahl von Beschleunigungswerten im ersten Bewegungsprofil beinhaltet.

9. Verfahren nach einem der Ansprüche 1 bis 8,
wobei die Bewegungstrajektorie gemäß einem trainierbaren Modell ausgewählt wird.

10. Verfahren nach Anspruch 9,

wobei das trainierbare Modell ein künstliches neuronales Netzwerk umfasst;
wobei ferner vorzugsweise Eingänge des trainierbaren Modells dazu ausgelegt sind, die Belegungshypothese der vorbestimmten Region, den Nutzwert von jeder Unterregion der nicht belegten Unterregionen, die Vielzahl von Geschwindigkeitswerten, die Vielzahl von Beschleunigungswerten und die Vielzahl von Lenkwinkelwerten, die mit der vorherigen Bewegungstrajektorie verknüpft sind, zu empfangen; oder wobei ferner vorzugsweise eine Eingangsschicht des trainierbaren Modells mindestens fünf Kanäle umfasst, wobei ein erster Kanal der mindestens fünf Kanäle ein Bild ist, auf dem die Belegungshypothese der vorbestimmten Region dargestellt ist, wobei ein zweiter Kanal der mindestens fünf Kanäle ein Bild ist, auf dem der Nutzwert von jeder Unterregion der nicht belegten Unterregionen dargestellt ist, wobei ein dritter Kanal der mindestens fünf Kanäle ein Bild ist, auf dem die Vielzahl von Geschwindigkeitswerten dargestellt ist, die mit der vergangenen Bewegungstrajektorie verknüpft sind, wobei ein vierter Kanal der mindestens fünf Kanäle ein Bild ist, auf dem die Vielzahl von Beschleunigungswerten dargestellt ist, die mit der vorherigen Bewegungstrajektorie verknüpft sind, und wobei ein fünfter Kanal der mindestens fünf Kanäle ein Bild ist, auf dem die Vielzahl von Lenkwinkelwerten dargestellt ist, die mit der vorherigen Bewegungstrajektorie verknüpft sind;
wobei ferner vorzugsweise ein Ausgang des trainierbaren Modells die künftige Bewegungstrajektorie ist, die mit der Vielzahl von Geschwindigkeitswerten der Vielzahl von Beschleunigungswerten und der Vielzahl von Lenkwinkelwerten verknüpft ist, die mit der künftigen Bewegungstrajektorie verknüpft sind.

11. Verfahren nach einem der Ansprüche 1 bis 10,
wobei die Funktion der Nutzwerte der Unterregionen, die von der Bewegungstrajektorie gekreuzt werden, eine Summe der Nutzwerte der Unterregionen beinhaltet, die von der Bewegungstrajektorie gekreuzt werden.

12. Verfahren nach Anspruch 11,
wobei die Funktion der Nutzwerte der Unterregionen, die von der Bewegungstrajektorie gekreuzt werden, einen Mittelwert der Nutzwerte der Unterregionen beinhaltet, die von der Bewegungstrajektorie gekreuzt werden.

13. Vorrichtung zum Bestimmen einer Bewegungstrajektorie eines Fahrzeugs (100) in einer vorbestimmten Region, wobei die vorbestimmte Region eine Vielzahl von Unterregionen umfasst, wobei die Vorrichtung Folgendes umfasst

einen oder mehrere Prozessoren (1002);

einen Belegungshypothesenbestimmer (222), der dazu ausgelegt ist, eine Belegungshypothese der vorbestimmten Region zu bestimmen, wobei die Belegungshypothese belegte Unterregionen der Vielzahl von Unterregionen und nicht belegte Unterregionen der Vielzahl von Unterregionen anzeigt;

einen Nutzwertbestimmer (224), der dazu ausgelegt ist, einen Nutzwert für jede Unterregion der vorbestimmten Region zu bestimmen;

einen Bewegungstrajektorienbestimmer (200), der dazu ausgelegt ist, die Trajektorie der Bewegung, die mindestens eine Unterregion der nicht belegten Unterregionen kreuzt, auf Basis einer Funktion der Nutzwerte von mindestens einer Unterregion der nicht belegten Unterregionen, die von der Trajektorie der Bewegung gekreuzt wird, und durch Maximieren eines Nutzens der Bewegung des Fahrzeugs (100) zu bestimmen, wobei der Nutzen der Bewegung des Fahrzeugs (100) durch eine Funktion der Nutzwerte der Unterregionen angezeigt wird, die von der Trajektorie der Bewegung gekreuzt werden;

wobei der Nutzwert von jeder Unterregion der nicht belegten Unterregionen ferner gemäß einer vorgesehenen Bewegungsrichtung des Fahrzeugs (100) bestimmt wird.

14. Fahrzeug (100), das Folgendes umfasst:
eine Vorrichtung zum Bestimmen einer Bewegungstrajektorie in einer vorbestimmten Region nach Anspruch 13.

15. Nichttransitorisches computerlesbares Medium (1000), auf dem ein Computerprogramm gespeichert ist, das, wenn es von einem Prozessor (1002) ausgeführt wird, ein Verfahren zum Bestimmen einer Bewegungstrajektorie in einer vorbestimmten Region implementiert, wobei die vorbestimmte Region eine Vielzahl von Unterregionen nach einem der Ansprüche 1 bis 12 umfasst.

**Revendications**

1. Procédé de détermination d'une trajectoire de mouvement d'un véhicule (100) dans une région prédéterminée, la région prédéterminée comportant une pluralité de sous-régions, le procédé étant exécuté par un ou plusieurs processeurs (1002), le procédé comportant les étapes consistant à

déterminer (902) une hypothèse d'occupation de la région prédéterminée, l'hypothèse d'occupation indiquant des sous-régions occupées de la pluralité de sous-régions et des sous-régions inoccupées de la pluralité de sous-régions ;

déterminer (904) une valeur d'utilité pour chaque sous-région de la région prédéterminée ;

déterminer (906) la trajectoire de mouvement qui traverse au moins une sous-région parmi les sous-régions inoccupées, d'après une fonction des valeurs d'utilité de la ou des sous-régions parmi les sous-régions inoccupées traversées par la trajectoire de mouvement et en maximisant une utilité de mouvement du véhicule (100), l'utilité de mouvement du véhicule (100) étant indiquée par une fonction des valeurs d'utilité des sous-régions traversées par la trajectoire de mouvement; la valeur d'utilité de chaque sous-région parmi les sous-régions inoccupées étant en outre déterminée selon une direction prévue de mouvement du véhicule (100).

2. Procédé selon la revendication 1,
la direction prévue de mouvement du véhicule (100) étant déterminée par un système de navigation.

3. Procédé selon l'une quelconque des revendications 1 ou 2,
l'hypothèse d'occupation de la région prédéterminée étant une grille d'occupation dynamique incluant une pluralité de mailles de grille.

4. Procédé selon la revendication 3,
chaque maille de grille de la pluralité de mailles de grille étant associée à une seule hypothèse d'occupation comportant au moins une mesure de probabilité d'occupation et une mesure de vitesse d'occupation.

5. Procédé selon la revendication 4,

l'unique hypothèse d'occupation étant déterminée d'après des indications de capteurs ;
l'unique hypothèse d'occupation étant de préférence déterminée en outre selon un filtre (510) de particules ou selon un filtre (560) de Dempster Shafer.

**6.** Procédé selon l'une quelconque des revendications 1 à 5,

la trajectoire de mouvement comportant un profil de mouvement ;
un profil de mouvement comportant une pluralité de valeurs de vitesse, une pluralité de valeurs d'accélération et une pluralité de valeurs d'angle de direction.

**7.** Procédé selon la revendication 6,
la détermination de la trajectoire de mouvement dans une région prédéterminée comportant en outre le fait d'indiquer un premier profil de mouvement et la sélection de la trajectoire de mouvement comportant en outre la détermination du profil de mouvement de la trajectoire à partir du premier profil de mouvement.

**8.** Procédé selon la revendication 7,
la détermination du profil de mouvement de la trajectoire à partir du premier profil de mouvement comprenant en outre la détermination de la pluralité de valeurs de vitesse associées au profil de mouvement de la trajectoire de mouvement à partir de la pluralité de valeurs de vitesse dans le premier profil de mouvement, la détermination de la pluralité de valeurs d'accélération associées au profil de mouvement de la trajectoire de mouvement à partir de la pluralité de valeurs d'accélération dans le premier profil de mouvement, et la détermination de la pluralité de valeurs d'accélération associées au profil de mouvement de la trajectoire de mouvement à partir de la pluralité de valeurs d'accélération dans le premier profil de mouvement.

**9.** Procédé selon l'une quelconque des revendications 1 à 8,
la trajectoire de mouvement étant sélectionnée selon un modèle susceptible d'être entraîné.

**10.** Procédé selon la revendication 9,

le modèle susceptible d'être entraîné comportant un réseau neuronal artificiel ;
des entrées du modèle susceptible d'être entraîné étant en outre de préférence configurées pour recevoir l'hypothèse d'occupation de la région prédéterminée, la valeur d'utilité de chaque sous-région parmi les sous-régions inoccupées, la pluralité de valeurs de vitesse, la pluralité de valeurs d'accélération et la pluralité de valeurs d'angle de direction associées à la trajectoire de mouvement passée ; ou
une couche d'entrée du modèle susceptible d'être entraîné comportant en outre de préférence au moins cinq canaux, un premier canal parmi lesdits au moins cinq canaux étant une image qui représente l'hypothèse d'occupation de la région prédéterminée, un deuxième canal parmi lesdits au moins cinq canaux étant une image qui représente la valeur d'utilité de chaque sous-région parmi les sous-régions inoccupées, un troisième canal parmi lesdits au moins cinq canaux étant une image qui représente la pluralité de valeurs de vitesse associées à la trajectoire de mouvement passée, un quatrième canal parmi lesdits au moins cinq canaux étant une image qui représente la pluralité de valeurs d'accélération associées à la trajectoire de mouvement passée, et un cinquième canal parmi lesdits au moins cinq canaux étant une image qui représente la pluralité de valeurs d'angle de direction associées à la trajectoire de mouvement passée ;
une sortie du modèle susceptible d'être entraîné étant en outre de préférence la trajectoire future de mouvement associée à la pluralité de valeurs de vitesse, à la pluralité de valeurs d'accélération et à la pluralité de valeurs d'angle de direction associées à la trajectoire future de mouvement.

**11.** Procédé selon l'une quelconque des revendications 1 à 10,
la fonction des valeurs d'utilité des sous-régions traversées par la trajectoire de mouvement comprenant une somme des valeurs d'utilité des sous-régions traversées par la trajectoire de mouvement.

**12.** Procédé selon la revendication 11,
la fonction des valeurs d'utilité des sous-régions traversées par la trajectoire de mouvement comprenant une moyenne des valeurs d'utilité des sous-régions traversées par la trajectoire de mouvement.

**13.** Dispositif de détermination d'une trajectoire de mouvement d'un véhicule (100) dans une région prédéterminée, la région prédéterminée comportant une pluralité de sous-régions, le dispositif comportant un ou plusieurs processeurs (1002),

un moyen (222) de détermination d'hypothèse d'occupation configuré pour déterminer une hypothèse d'occupation de la région prédéterminée, l'hypothèse d'occupation indiquant des sous-régions occupées de la pluralité de sous-régions et des sous-régions inoccupées de la pluralité de sous-régions ;

**EP 3 902 728 B1**

un moyen (224) de détermination de valeur d'utilité configuré pour déterminer une valeur d'utilité pour chaque sous-région de la région prédéterminée ;

un moyen (200) de détermination de trajectoire de mouvement configuré pour déterminer la trajectoire de mouvement qui traverse au moins une sous-région parmi les sous-régions inoccupées, d'après une fonction des valeurs d'utilité de la ou des sous-régions parmi les sous-régions inoccupées traversées par la trajectoire de mouvement et en maximisant une utilité de mouvement du véhicule (100), l'utilité de mouvement du véhicule (100) étant indiquée par une fonction des valeurs d'utilité des sous-régions traversées par la trajectoire de mouvement ; la valeur d'utilité de chaque sous-région parmi les sous-régions inoccupées étant en outre déterminée selon une direction prévue de mouvement du véhicule (100).

14. Véhicule (100) comportant :
un dispositif de détermination d'une trajectoire de mouvement dans une région prédéterminée selon la revendication 13.

15. Support non transitoire (1000) lisible par ordinateur conservant un programme informatique qui, lorsqu'il est exécuté par un processeur (1002), met en œuvre un procédé de détermination d'une trajectoire de mouvement dans une région prédéterminée, la région prédéterminée comportant une pluralité de sous-régions selon l'une quelconque des revendications 1 à 12.

# FIG. 1

# FIG. 2

# FIG. 3

# FIG. 4

# FIG. 5

# FIG. 6

# FIG. 7

# FIG. 8

# FIG. 9

902 — Determining an occupancy hypothesis of the predetermined region, wherein the occupancy hypothesis indicates occupied sub-regions of the plurality of sub-regions and non-occupied sub-regions of the plurality of sub-regions.

904 — Determining a utility value of each sub-region of the non-occupied sub-regions;

906 — Determining a utility value of the trajectory of motion wherein the trajectory of motion crosses at least one sub-region of the non-occupied sub-regions, wherein the utility value of the trajectory of motion is determined according to a function of the utility values of the least one sub-region of the non-occupied sub-regions crossed by the trajectory of motion;

908 — Selecting the trajectory of motion to maximize the utility value of the trajectory of motion.

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEYER-DELIUS et al.** Grid-Based Models for Dynamic Environments. *Technical Report*, 2011, vol. 265, http://ais.informatik.uni-freiburg.de/publications/papers/report00265.pdf

- **NUSS et al.** A Random Finite Set Approach for Dynamic Occupancy Grid Mapswith Real-Time Application. *The International Journal of Robotics Research*, 10 September 2016, 1-20, https:/arxiv.org/pdf/1605.02406.pdf